# EUROPEAN PATENT APPLICATION

(11) **EP 3 035 507 A1**
(43) Date of publication of application: **22.06.2016**
(21) Application number: 15199767.3
(22) Date of filing: 14.12.2015
(51) Int. Cl.: H02K 17/44, H02K 11/042, H02K 11/33, H02K 7/18

(54) **GENERATOR SYSTEM AND WIND POWER GENERATION SYSTEM USING THE SAME**

(30) Priority: 15.12.2014 JP 2014252587
(71) Applicant: Hitachi, Ltd., Tokyo 100-8280 (JP)
(72) Inventor: HORI, Masahiro, Tokyo, 100-8280 (JP); KIMURA, Mamoru, Tokyo, 100-8280 (JP); KUSUNO, Nobuhiro, Tokyo, 100-8280 (JP)
(74) Representative: MERH-IP Matias Erny Reichl Hoffmann Patentanwälte PartG mbB

(57) **Abstract**

A generator system or a wind power generation system facilitating electric power converter component replacement during maintenance is provided.

In order to achieve the above-described object, a generator system includes a generator 2 having a stator having a stator winding 7 and a rotor 6 having a rotor winding 8 and arranged via a predetermined gap on a bore diameter side of the stator 5, an electric power converter 4 electrically connected to the rotor winding 7 and stored in the rotor 6, a base 18 arranged on a bore diameter side of the rotor 6 and has at least a part of the electric power converter 4 fixed thereto, and a supporting member 20 supporting the base 18 and fixed inside the rotor 6.

## Description

### Technical Field

The present invention relates to a generator system or a wind power generation system and, more particularly, to a generator system or a wind power generation system provided with an electric power converter inside a generator.

### Background Art

Electric power generation systems using natural energy for wind power generation, photovoltaic power generation, and the like are attracting attention as of late for the purpose of global warming prevention. Among the systems, wind power generation systems using wind power use AC excitation-type generators as electric power generating devices in many cases.

In a case where the AC excitation-type generator is used as the electric power generating device of the wind power generation system, excitation electric power needs to be supplied to a rotor winding of a rotating rotor during its operation. In most cases, a slip ring and a brush are disposed for electric power supply to the rotor winding, and energization is performed based on a contact between the brush and the rotating slip ring.

However, a lot of energy is required for an electric power generating operation to be performed by the wind power generation system, and the slip ring and the brush for excitation electric power supply being disposed for the electric power generating operation results in abrasion of the brush, which calls for regular maintenance.

In the wind power generation system, the AC excitation-type generator is installed in a nacelle that is at the top of a windmill and the regular maintenance is required to be performed within the limited space of the nacelle, and thus simplified maintenance such as brush removal has been required.

The technique that is disclosed in PTL 1 is an example of the brushless AC excitation-type generator.

PTL 1 discloses a technique including a stator having a stator winding, a rotor having a rotor winding and arranged with a gap on a bore diameter side of the stator, a second generator having a second stator having a second stator winding and a second rotor having a second rotor winding and is arranged with a gap on a bore diameter side of the second stator, and an electric power converter electrically connected to the rotor winding and the second rotor winding, in which the electric power converter is arranged to rotate while the rotor rotates. Electric power can be supplied to the rotor of a first generator via the second generator, and thus brush removal can be achieved.

### Citation List

### Patent Literature

PTL 1: JP-A-2013-110801

### Summary of Invention

### Technical Problem

The generator can become brushless according to PTL 1. However, facilitation of a maintenance operation is required as another object. This is because wind power generators in general have a long service life, approximately 20 years for example, and an electric power conversion element in particular is regarded to break down for any reason within that period. Accordingly, it is desirable that the electric power conversion element that is stored in the rotor can be easily taken out or attached during maintenance.

The present invention has been made in view of the above-described circumstances, and an object thereof is to provide a generator system or a wind power generation system facilitating electric power converter component replacement during maintenance.

### Solution to Problem

In order to achieve the above-described object, a generator system according to the present invention includes a generator having a stator having a stator winding and a rotor having a rotor winding and arranged via a predetermined gap on a bore diameter side of the stator, an electric power converter electrically connected to the rotor winding and stored in the rotor, a base arranged on a bore diameter side of the rotor and has at least a part of the electric power converter fixed thereto, and a supporting member supporting the base and fixed inside the rotor.

A wind power generation system according to the present invention includes a rotor rotated by wind, and a generator system operated to generate electric power in response to rotation of the rotor.

### Advantageous Effects of Invention

A generator system or a wind power generation system facilitating electric power converter component replacement during maintenance can be provided.

### Brief Description of Drawings

[Fig. 1] Fig. 1 is a cross sectional view relating to Embodiment 1 of a generator system according to the present invention and illustrating an overview of the generator system.
[Fig. 2] Fig. 2 is a perspective view illustrating one phase of an electric power converter in relation to Embodiment 1 of the present invention.
[Fig. 3] Fig. 3 is a perspective view illustrating an axial half cross section in relation to Embodiment 1 of the generator system according to the present invention.
[Fig. 4] Fig. 4 is a perspective view illustrating an axial half cross section in relation to Embodiment 2 of the generator system according to the present invention.
[Fig. 5] Fig. 5 is a perspective view illustrating one phase of the electric power converter in relation to Embodiment 2 of the present invention.
[Fig. 6] Fig. 6 is a perspective view illustrating an axial half cross section in relation to Embodiment 2 of the generator system according to the present invention.
[Fig. 7] Fig. 7 is a perspective view illustrating Embodiment 3 of the generator system according to the present invention.
[Fig. 8] Fig. 8 is a perspective view illustrating Embodiment 3 of the generator system according to the present invention.
[Fig. 9] Fig. 9 is a perspective view illustrating Embodiment 4 of the generator system according to the present invention.
[Fig. 10] Fig. 10 is a perspective view illustrating Embodiment 5 of the generator system according to the present invention.
[Fig. 11] Fig. 11 is a perspective view illustrating Embodiment 6 of the generator system according to the present invention.
[Fig. 12] Fig. 12 is a schematic configuration diagram illustrating a wind power generation system that adopts the generator system according to the present invention (Embodiment 7).

### Description of Embodiments

Hereinafter, a generator system and a wind power generation system according to the present invention will be described based on illustrated embodiments. Storing of an electric power converter in a rotor of a generator will be described in each of the embodiments below. In the following description, the same reference numerals will be used to refer to the same components. The followings are merely examples, and the embodiments of the present invention are not limited to the specific aspects described below.

### [Embodiment 1]

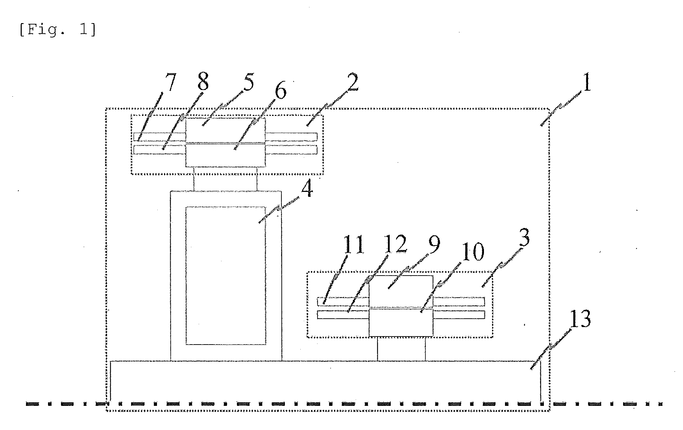

Fig. 1 shows Embodiment 1 of the generator system according to the present invention. In the following descriptions of a main generator and an auxiliary generator, a radial gap-type generator in which a gap between a stator and a rotor is formed in a radial direction will be used as an example. In addition, a voltage-type electric power converter will be used as an example of the electric power converter in the following description.

As illustrated in the drawing, a generator system 1 according to this embodiment is provided with a main generator 2 that is a first generator which functions as a generator for sending generated electric power to an electric power system, an auxiliary generator 3 that is a second generator which functions as an exciter or a generator depending on an operating condition, and an electric power converter 4 that is electrically connected to the main generator 2 and the auxiliary generator 3.

The main generator 2 is configured to have a main generator stator 5, a main generator rotor 6 that is arranged with a predetermined gap on a bore diameter side of the main generator stator 5, a three-phase main generator stator winding 7 that is wound in two layers in short pitch winding or the like in a slot disposed in the main generator stator 5, and a three-phase main generator rotor winding 8 that is wound in two layers in full pitch winding or the like in a slot disposed in the main generator rotor 6. The three-phase main generator stator winding 7 and the three-phase main generator rotor winding 8 are arranged with an electrical interval of 120°.

Likewise, the auxiliary generator 3 is configured to have an auxiliary generator stator 9, an auxiliary generator rotor 10 that is arranged with a predetermined gap on a bore diameter side of the auxiliary generator stator 9, a three-phase auxiliary generator stator winding 11 that is wound in two layers in short pitch winding or the like in a slot disposed in the auxiliary generator stator 9, and a three-phase auxiliary generator rotor winding 12 that is wound in two layers in full pitch winding or the like in a slot disposed in the auxiliary generator rotor 10. The three-phase auxiliary generator stator winding 11 and the three-phase auxiliary generator rotor winding 12 are arranged with an electrical interval of 120°.

The main generator 2 and the auxiliary generator 3 described above have different operation modes (described later). Specifically, the main generator 2 performs an electric power-generating operation at all times whereas the auxiliary generator 3 is operated as the exciter or the generator depending on a rotation speed. Each of the main generator 2 and the auxiliary generator 3 is an AC excitation-type generator that is operated to generate electric power by supplying excitation electric power to a rotor winding (via the electric power converter 4).

An electric power converter that is electrically connected to the main generator 2 and an electric power converter that is electrically connected to the auxiliary generator 3 constitute the electric power converter 4. The electric power converter that is electrically connected to the main generator 2 and the electric power converter that is electrically connected to the auxiliary generator 3 are electrically DC-connected to each other. Accordingly, each of the electric power converters is enough with AC-DC conversion.

The main generator 2, the auxiliary generator 3, and the electric power converter 4 described above are mechanically connected to a rotary shaft 13.

The electric power converter 4 that is illustrated in Fig. 1 is arranged in a bore diameter of the main generator 2. This is because the main generator has a higher torque in most cases, and thus is larger in size as well and can ensure a wide space for the electric power converter 4 to be built thereinto. Still, the electric power converter 4 may be arranged in a bore diameter of the auxiliary generator 3 or may be divided to be arranged in the bore diameter of the main generator 2 and the bore diameter of the auxiliary generator 3 at the same time.

For control in compliance with the operating condition, the electric power converter 4 needs to receive command information from the outside or transmit information on an operating situation. In this embodiment, the electric power converter 4 rotates, and thus wireless communication is effective for the transmission of the information, and it is preferable that a device capable of wireless information transmission and reception is connected to the electric power converter 4. However, the transmission of the information does not require much energy, and thus little wear arises despite the use of a brush. Accordingly, a brush and a slip ring for information transmission by the electric power converter 4 may be disposed or a brush and a slip ring for earthing may be disposed in a similar manner. In addition, the rotary shaft 13 may be divided into one on the main generator 2 side and the other on the auxiliary generator 3 side connected by a coupling or the like.

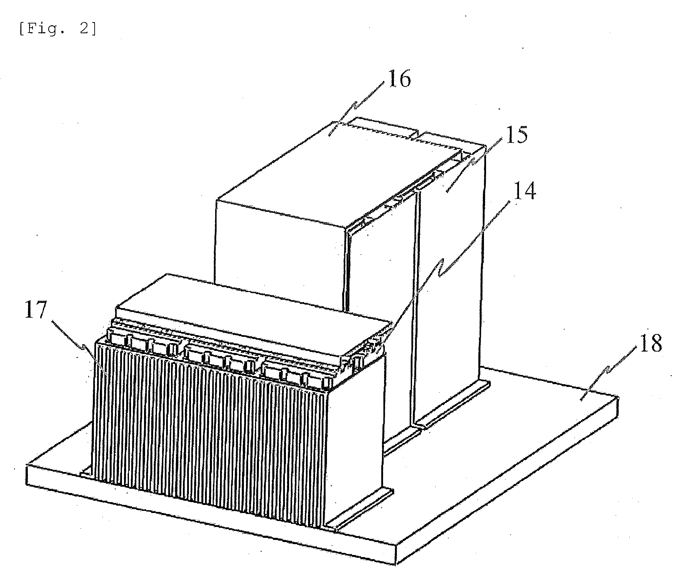

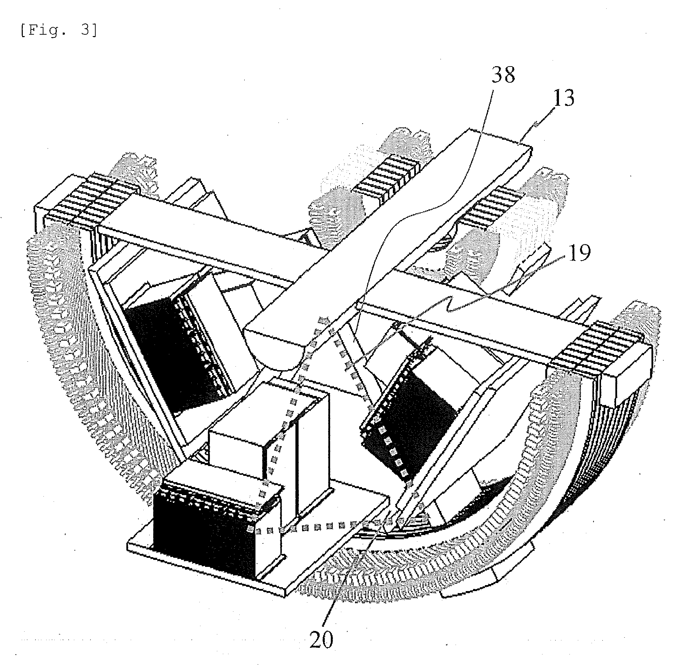

Fig. 2 shows one phase of the electric power converter. An electric power conversion element 14, a capacitor 15, and a bus bar 16 mainly constitute an electric power conversion element, and a fin 17 for cooling is attached to the electric power conversion element 14. These electric power conversion elements are fixed to a base 18. Fig. 3 is a perspective view of an axial half cross section of the generator system. The main generator 2 and the rotary shaft 13 are connected to each other by arms 38, and a main generator rotor bore diameter (electric power converter arrangement space) is divided by the arms 38. The electric power converter 4 is inserted into the electric power converter arrangement space 19 as illustrated in Fig. 3, and is fixed inside the main generator rotor 6 by the base 18 and a frame 20 as a supporting member being fixed. The frame is arranged for support against a centrifugal force applied to the base 18, and also serves to improve a strength of the arms 38 in a circumferential direction by being arranged between the arms 38.

In this case, attachment to a place allowing an easier operation becomes possible and the operation is becomes easier than in a case where the electric power conversion element is directly fixed to the frame. In addition, the attachment to the base 18 can reduce the number of removed elements and reduce the amount of labor because the operation can be performed with all the electric power conversion element taken out for each base 18 during electric power converter replacement for maintenance whereas every other component needs to be taken out when a component to be replaced is hard to access in a case where the electric power converter is directly fixed to the frame.

In Figs. 2 and 3, six electric power conversion elements and four capacitors constitute the electric power converter of each phase. However, it is a matter of course that the numbers may be changed in view of a generator output.

### [Embodiment 2]

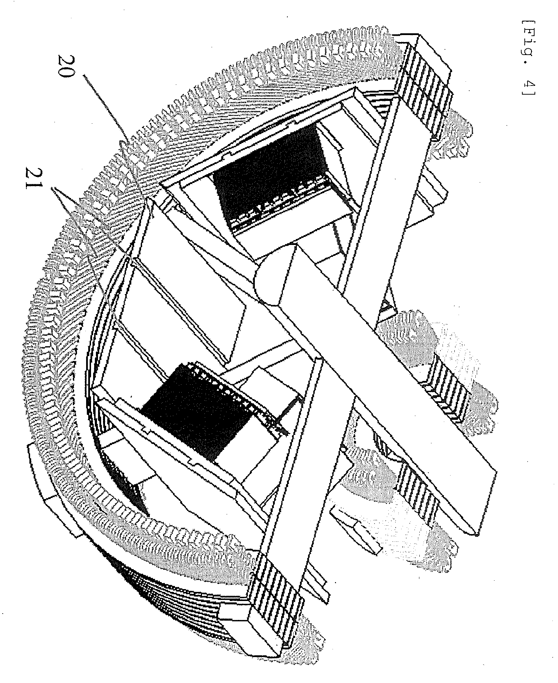

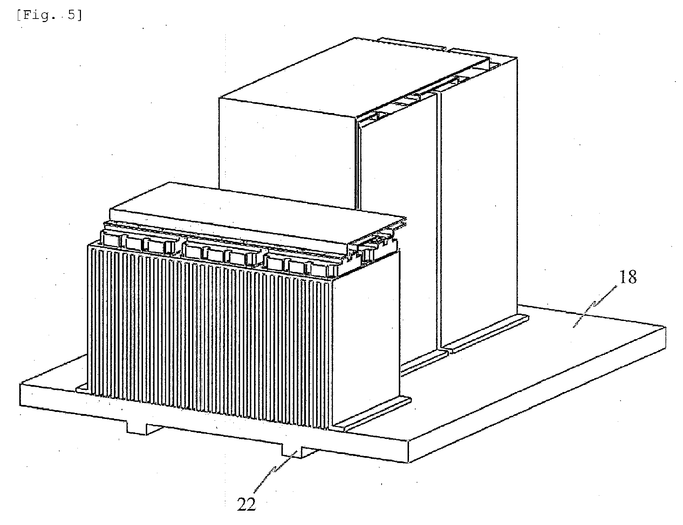

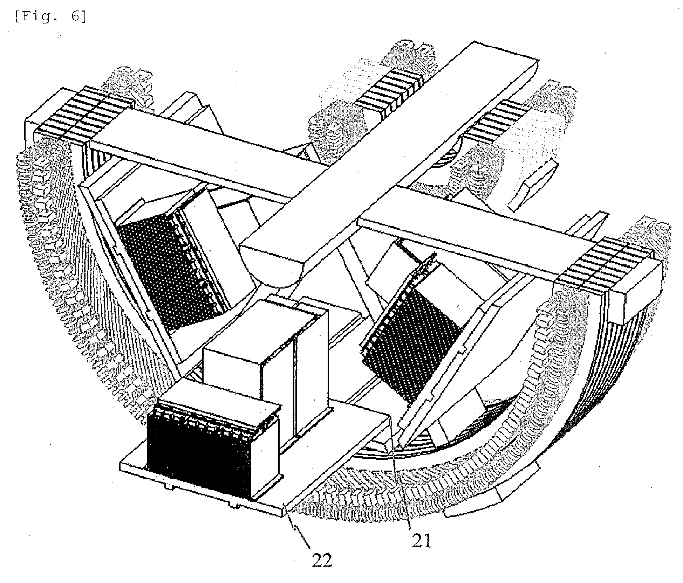

In Embodiment 1, the frame 20 and the base 18 are flat plates with no groove disposed therein. However, the base may be a base in which grooves 21 are disposed as illustrated in Fig. 4, and the frame 20 in this case may be a frame on which projection portions 22 fitted into the grooves 21 are disposed as illustrated in Fig. 5. In this case, a circumferential position of the base 18 with respect to the frame 20 is uniquely determined as illustrated in Fig. 6, and thus the electric power conversion element can be more easily inserted. In addition, since the projection portions 22 are fitted into the grooves 21, the groove can prevent a circumferential movement of the base 18 attributable to rotation of the rotor.

According to Figs. 4 and 5, the number of the grooves 21 is two and the number of the projection portions 22 is two. However, it is a matter of course that a similar effect can be achieved even when the numbers are changed. In addition, the grooves 21 may be disposed in the base and the projection portions 22 may be disposed on the frame instead of the projection portions 22 being disposed on the base 18 and the grooves 21 being disposed in the frame 20. According to Fig. 4, the groove 21 has a quadrangular shape, but the shape may be another shape such as a triangular shape. Even in this case, the projection portion 22 illustrated in Fig. 5 may have a shape corresponding to the shape of the groove.

### [Embodiment 3]

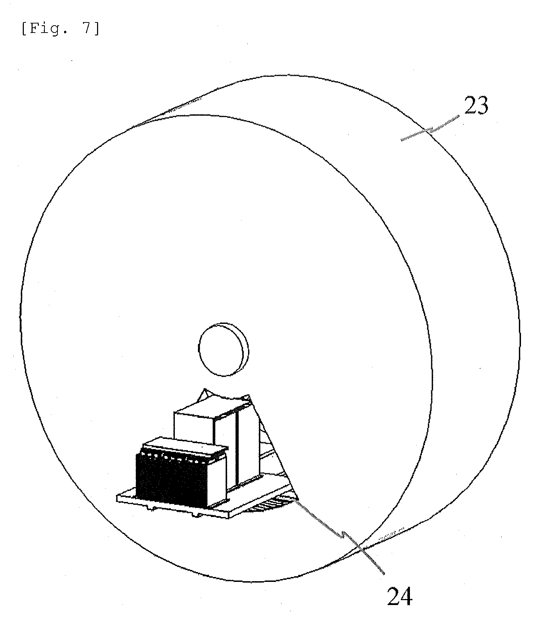

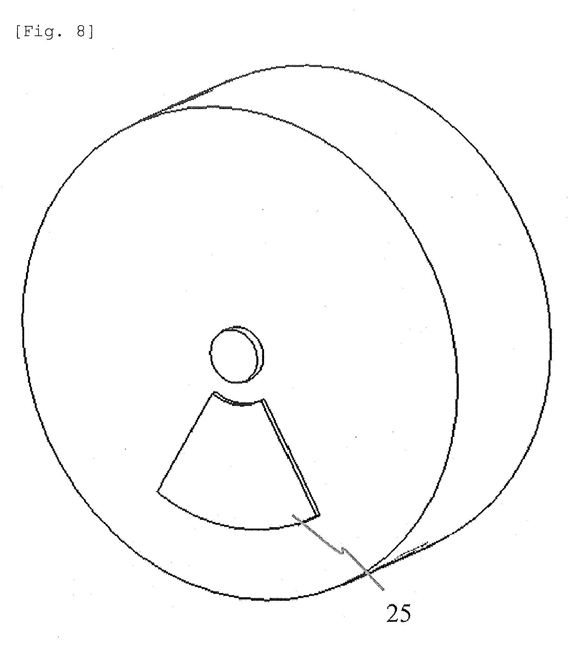

Figs. 7 and 8 show Embodiment 3 of this generator system.

Fig. 7 shows a generator housing. As illustrated in Fig. 7, an electric power generator system may be covered with a housing 23 and an insertion hole 24 that allows the electric power conversion element fixed to the base 18 to be moved in and out may be disposed in the housing. In addition, a lid 25 that covers the insertion hole 24 may be disposed as illustrated in Fig. 8. In this case, not only can the electric power conversion element be moved in and out but also the generator can be fully closed, and thus the generator can be protected from salt damage or the like.

According to Figs. 7 and 8, the number of the insertion hole 24 is one. However, it is a matter of course that a similar effect can be achieved even when the number is two or more.

According to Fig. 7, the insertion hole 24 is disposed on the main generator 2 side. However, in a case where the electric power converter 4 is arranged in the bore diameter of the auxiliary generator 3, it is preferable that the insertion hole 24 is arranged on the auxiliary generator 3 side. In a case where the electric power converter 4 is divided and arranged in the bore diameter of the main generator 2 and the bore diameter of the auxiliary generator 3, it is preferable that the insertion hole 24 is arranged on the main generator 2 side and the auxiliary generator 3 side alike.

### [Embodiment 4]

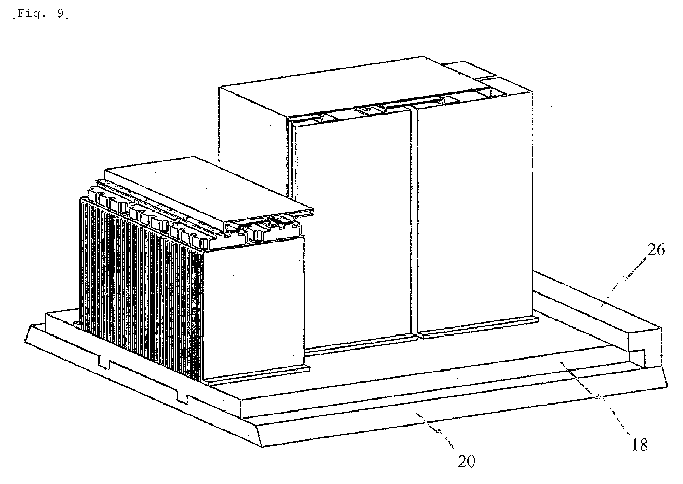

Fig. 9 shows Embodiment 4 of this generator system.

According to the embodiment illustrated in the drawing, an insert 26 for the base 18 is disposed on the side of the frame 20 that is opposite to the insertion hole of the base 18 (or side where the base 18 is inserted) in a longitudinal direction of the rotary shaft. In this case, the side opposite to the insertion hole 24 in the longitudinal direction does not have to be fixed by a binder such as a bolt. Accordingly, only the insertion hole 24 side has to be stopped by a binder, and an operation for removal or the like is facilitated.

The insert 26 that is disposed in the frame 20 may be disposed based on processing of the frame 20 and may be prepared as a separate member attached by welding or the like.

### [Embodiment 5]

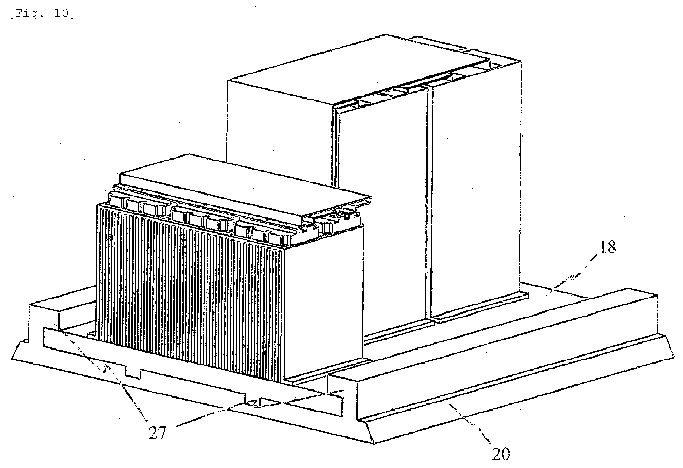

Fig. 10 shows Embodiment 5 of this generator system.

In this embodiment illustrated in the drawing, inserts 27 for the base 18 are disposed on both circumferential sides of the frame 20. Because the inserts 27 function as guide units during the insertion of the base 18, the insertion is facilitated. The circumferential movement of the base 18 attributable to the rotation of the rotor can be prevented as well. In addition, the number of binders can be reduced because the inserts 27 fix the base.

The inserts 27 that are disposed in the frame 20 may be disposed based on processing of the frame 20 and may be prepared as separate members attached by welding or the like.

### [Embodiment 6]

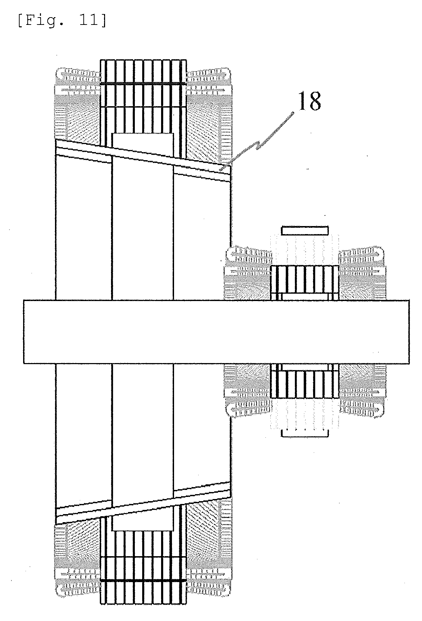

Fig. 11 shows Embodiment 6 of this generator system.

In this embodiment illustrated in the drawing, the frame 20 is arranged at an angle to the rotary shaft. In this case, the base 18 on the lower side becomes almost horizontal in a case where, for example, the rotary shaft 13 is arranged at an angle to a horizontal plane to be downward from the main generator 2 side to the auxiliary generator 3. Accordingly, the electric power converter 4 on the lower side can be easily taken out during maintenance.

In Fig. 11, the frame 20 is arranged at an angle to become narrower toward the auxiliary generator 3 from the main generator 2. However, this may be reversed in compliance with a condition of the use of the generator system.

### [Embodiment 7]

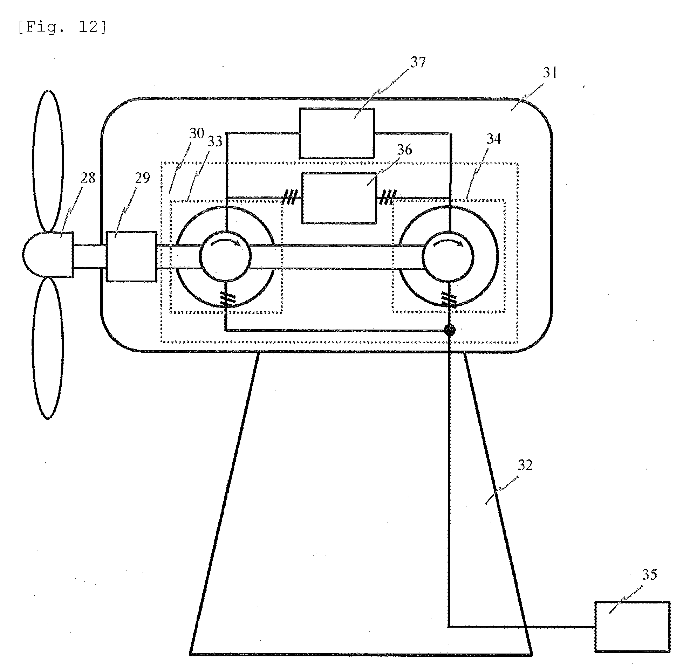

Fig. 12 shows Embodiment 7, in which the generator system according to the present invention is applied to the wind power generation system.

As illustrated in the drawing, a rotor 28 that is rotated by wind, a generator system 30 according to the present invention that is connected to the rotor 28 via a speed increaser 29, a nacelle 31 that stores the generator system 30 therein, and a tower 32 that supports the nacelle constitute the wind power generation system according to this embodiment, in which a main generator 33 and an auxiliary generator 34 are rotated by a turning force of the rotor 28 and a main generator stator winding and an auxiliary generator stator winding are connected to an electric power system 35 side.

Accordingly, energy of the wind received by the rotor 28 is converted into electrical energy by the generator system 30 and electric power can be transmitted to the electric power system 35.

According to this embodiment, the adoption of the generator system described above facilitates maintenance in the event of an electric power converter failure, and thus the generator can have an improved rate of operation.

A protective device 37 may be disposed in parallel to an electric power converter 36. Then, the electric power converter 36 can be protected from excessive electric power that is applied in the event of a system failure. In addition, the present invention may be applied to a gearless system from which the speed increaser 29 is removed.

The present invention is not limited to the embodiments described above, and includes various modification examples.

For example, the embodiments described above are for easy understanding of the present invention, and do not have to be provided with every configuration described above. Parts of the configurations of certain embodiments may be substituted with or added to those of the other embodiments. In addition, the other configurations can be added to, removed from, or substituted with parts of the configurations of certain embodiments.

### Reference Signs List

- 1: Generator system
- 2: Main generator
- 3: Auxiliary generator
- 4: Electric power converter
- 5: Main generator stator
- 6: Main generator rotor
- 7: Main generator stator winding
- 8: Main generator rotor winding
- 9: Auxiliary generator stator
- 10: Auxiliary generator rotor
- 11: Auxiliary generator stator winding
- 12: Auxiliary generator rotor winding
- 13: Rotary shaft
- 14: Electric power conversion element
- 15: Capacitor
- 16: Bus bar
- 17: Fin
- 18: Base
- 19: Electric power converter arrangement space
- 20: Frame
- 21: Groove
- 22: Projection portion
- 23: Housing
- 24: Insertion hole
- 25: Lid
- 26, 27: Insert
- 28: Rotor
- 29: Speed increaser
- 30: Generator system
- 31: Nacelle
- 32: Tower
- 33: Main generator
- 34: Auxiliary generator
- 35: Electric power system
- 36: Electric power converter
- 37: Protective device

## Claims

1. A generator system (1) comprising:
a generator including a stator having a stator winding and a rotor (6) having a rotor winding and arranged via a predetermined gap on a bore diameter side of the stator;
an electric power converter (4) electrically connected to the rotor winding and stored in the rotor;
a base (18) arranged on a bore diameter side of the rotor (28) and has at least a part of the electric power converter (4) fixed thereto; and
a supporting member supporting the base and fixed inside the rotor (28).

2. The generator system (1) according to claim 1,
wherein a groove is formed in a longitudinal direction of a rotary shaft (13) in one of the base and the supporting member, and
wherein the other one of the base and the supporting member is provided with a projection portion corresponding in shape to the groove.

3. The generator system (1) according to claim 1 or 2, further comprising:
a housing (23) storing at least the generator therein and provided with an insertion hole of the electric power converter (4); and
a lid covering the insertion hole.

4. The generator system (1) according to any one of claims 1 to 3,
wherein the base is fixed by the supporting member on a side opposite to the insertion hole in the longitudinal direction of the rotary shaft (13).

5. The generator system (1) according to any one of claims 1 to 4, further comprising:
guide units arranged on both circumferential sides with respect to the base (18).

6. The generator system (1) according to any one of claims 2 to 5,
wherein the supporting member is arranged at an angle to the rotary shaft (13).

7. The generator system (1) according to any one of claims 1 to 6,
wherein the stator winding is a first stator winding, the stator is a first stator, the rotor winding is a first rotor winding, the rotor is a first rotor, and the generator is a first generator,
wherein the generator system (1) is provided with a second generator including a second stator having a second stator winding and a second rotor having a second rotor winding and arranged via a predetermined gap on a bore diameter side of the second stator, and
wherein the electric power converter (4) is also electrically connected to the second rotor winding.

8. A wind power generation system comprising:
a rotor (6) rotated by wind; and
the generator system (1) according to any one of claims 1 to 7 operated to generate electric power in response to rotation of the rotor (28).
